# EUROPEAN PATENT SPECIFICATION

(11) **EP 3 672 004 B1**
(45) Date of publication and mention of the grant of the patent: **04.10.2023**
(21) Application number: 18214000.4
(22) Date of filing: 19.12.2018
(51) Int. Cl.: H02G 15/18, H02G 15/105, H02G 15/10

(54) **POWER CABLE SYSTEM**
STROMKABELSYSTEM
SYSTÈME DE CÂBLE D'ALIMENTATION

(43) Date of publication of application: 24.06.2020
(73) Proprietor: NKT HV Cables AB, 371 60 Lyckeby (SE)
(72) Inventor: WORZYK, Thomas, 371 94 Lyckeby (SE); GUSTAFSSON, Kristian, 371 52 Karlskrona (SE)
(74) Representative: Kransell & Wennborg KB

(56) References cited:
- EP-A1- 3 034 561
- DE-C1- 19 512 018
- US-A- 4 464 583
- US-B1- 7 476 114
- US-B2- 8 391 653

## Description

### TECHNICAL FIELD

The present disclosure relates to power cables in general and in particular to power cable systems comprising a power cable and a link box.

### BACKGROUND

In order to obtain the required length of a power cable in an installation, a power cable typically comprises one or more joints connecting the cable sections. Such power cables may have a continuous metallic screen which is cut in the joint region. A gap is hence formed between the end portions of the two metallic screen sections in the joint region.

For land cables, the end portions of the metallic screen sections that have been cut may be connected to bond leads which are brought out from the power cable. The bond leads are connected to an external link box to selectively enable disconnection of the two metallic screen sections for fault localisation/test purposes. The link box may hence have means for connecting the bond leads and hence the two metallic screen sections with each other. When the power cable is in operation, the metallic screen sections of the two sides of the joint are normally connected to each other via the connection of the bond leads in the link box. The metallic screen sections are in this situation also connected to ground via the link box. In case fault localisation measurements are to be carried out, the bond leads and hence the metallic screen sections are typically disconnected from each other and from ground.

The loop formed by the bond leads which are drawn to the link box has an impedance that comprises an inductive component, which is hence frequency-dependent. In the event of a ground fault in the power cable a voltage surge/transient may travel along the metallic screen. Due to the voltage drop over the loop, a high potential difference may occur between the bond lead connection points with the metal screen sections and hence over the gap between the two metallic screen sections on either side of the joint in the power cable. The high potential difference in such cases can lead to dielectric breakdown over the gap and cause subsequent failure of the power cable.

DE 195 12 018 C1 discloses a magnetic field compensation circuit for an HV cable. The circuit has the insulating mantles or screenings of each of the cable conductors earthed at a given point along their length and cross-connected at a further point, with earthing of the cross-connections via voltage limiting elements. A respective impedance is connected in parallel with each of the voltage limiting elements. The impedances are connected in series with respective switches and have parallel short-circuit paths which are closed in dependence on the current in each of the cable conductors.

US2011026872 discloses an electric power distribution cable and that a plurality of Surge Voltage Limiters (SVL) is coupled to the electric power distribution cable. The SVLs are distributed approximately every 500 m along the cable. Each SVL has a first end electrically connected to the cable metallic sheath, and a second end electrically connected to earth.

### SUMMARY

In view of the above, a general object of the present disclosure is to provide a power cable system which solves or at least reduces the problems of the prior art.

There is hence provided a power cable system comprising: a power cable having a joint, the power cable comprising: a conductor, an insulation system surrounding the conductor, a metal screen surrounding the insulation system, wherein the metal screen has a first metal screen section surrounding the insulation system on a first side of the joint and a second metal screen section surrounding the insulation system on a second side of the joint, and a surge arrester assembly having a first terminal electrically connected to the first metal screen section and a second terminal electrically connected to the second metal screen section, whereby the first metal screen section is arranged with a gap from the second metal screen section; a first bonding lead electrically connected to the first metal screen section and a second bonding lead electrically connected to the second metal screen section; and a link box, wherein the first bonding lead and the second bonding lead are configured to be electrically connected to each other via the link box to thereby electrically connect the first metal screen section and the second metal screen section with each other.

The risk of overvoltages due to voltage surges traveling along the metal screen may hence be eliminated or at least reduced. The risk of electric breakdown and potential damage to the power cable as a result of voltage surges traveling along the metal screen may hence be reduced.

According to one embodiment the surge arrester assembly comprises at least one surge arrester electrically connected between the first terminal and the second terminal.

According to one embodiment the first bonding lead is electrically connected to the first terminal, and the second bonding lead is electrically connected to the second terminal.

According to one embodiment the first terminal is a first annular metal structure mounted around the insulation system and the second terminal is a second annular metal structure mounted around the insulation system axially spaced apart from the first annular metal structure.

According to one embodiment the first annular metal structure and the second annular metal structure are made of copper.

According to the invention the surge arrester assembly comprises a plurality of surge arresters in the form of surge arrester discs, the surge arrester discs being connected in parallel with each other between the first terminal and the second terminal.

The surge arrester discs may be varistors, such as metal oxide varistors.

According to one embodiment the surge arrester assembly is configured to be mounted adjacent to one axial end of the joint.

Hence, for example, the first annular metal structure and the second annular metal structure, with one or more surge arresters connected therebetween, may be mounted adjacent to one axial end of the joint.

The joint may have a larger diameter than other portions of the power cable. The diameter of the first annular metal structure and the second annular metal structure may for example be designed to be equal or essentially equal to the inner diameter of the outermost layer of the joint, for example the inner diameter of a shrink tube forming the outer layer of the joint.

According to one embodiment the power cable comprises a shrink tube surrounding the surge arrester assembly and forming part of an external surface of the power cable. The shrink tube may hence form an external cover of the surge arrester assembly. The shrink tube may also form the external surface of the joint.

According to one embodiment the metal screen is formed by a plurality of metal wires helically wound around the insulation system in the axial direction of the power cable.

According to one embodiment the plurality of metal wires on a first side of the joint form the first metal screen section, which in a region of the joint is bundled into a first bundle thereby terminating the first metal screen section, and the plurality of metal wires on a second side of the joint form the second metal screen section, which in a region of the joint is bundled into a second bundle thereby terminating the second metal screen section, the first bundle and the second bundle being connected to the surge arrester assembly.

According to one embodiment the first bundle is mechanically connected to the first terminal and the second bundle is mechanically connected to the second terminal.

According to one embodiment the power cable is a DC cable.

According to one embodiment the power cable is a high voltage cable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Examples of the inventive concept will now be described, by way of example, with reference to the accompanying drawings, in which:
Fig. 1 schematically shows a cross-section of an example of a power cable;
Fig. 2 schematically shows a side view of a power cable with a joint;
Fig. 3 shows a specific realisation of a power cable system including a power cable such as the one depicted in Fig. 1;
Fig. 4a shows an example of a simplified model of parts of a power cable system during normal operation of a power cable; and
Fig. 4b shows the model in Fig. 4a during a voltage surge.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

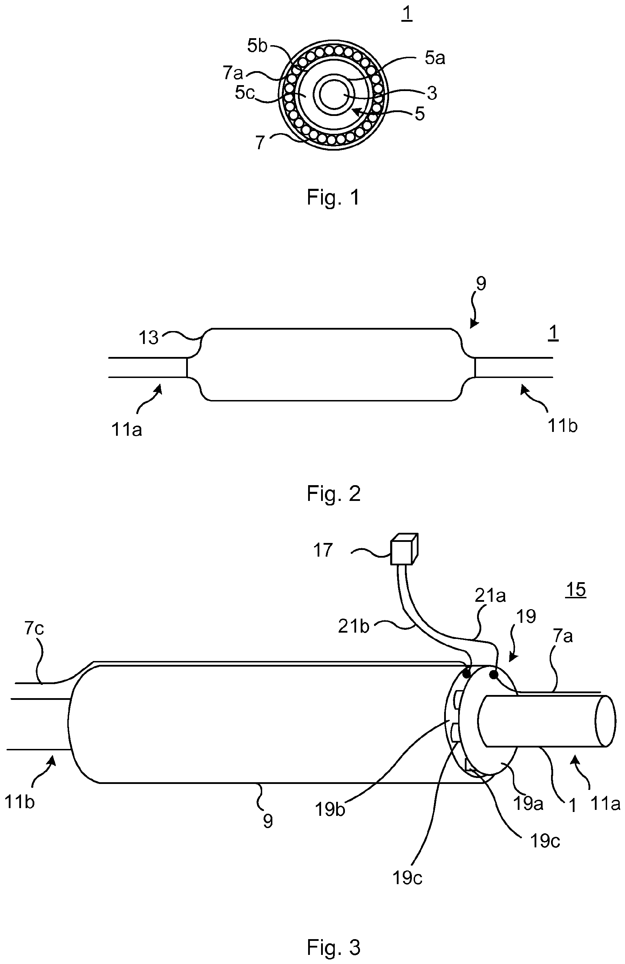

Fig. 1 shows a cross-section of an example of a power cable 1. The power cable 1 may preferably be a DC power cable. The power cable 1 may preferably be a land cable.

The exemplified power cable 1 comprises a conductor 3 and an insulation system 5 arranged around the conductor 3. The insulation system 5 may for example comprise an inner semiconducting layer 5a arranged around the conductor 3, an outer semiconducting layer 5b, and an insulating layer 5c arranged radially between the inner semiconducting layer 5a and the outer semiconducting layer 5b.

The power cable 1 comprises a metal screen 7 arranged around the insulation system 5. In the example shown in Fig. 1, the metal screen 7 is arranged radially outside of the outer semiconducting layer 5b. The metal screen 7 may for example comprise a plurality of metal wires 7a arranged in a helical manner in the axial direction of the power cable 1. The metal wires 7a together form the metal screen 7.

Alternatively, the metal screen 7 may for example be formed of a metal foil wound around the outer semiconducting layer 5b or the metal screen 7 may be made of sheet metal folded around the outer semiconducting layer 5b with its folded ends being glued or welded.

Fig. 2 schematically depicts a side view of the power cable 1. The power cable 1 has a joint 9. The joint 9 connects a first cable length or section 11a and a second cable length or section 11b of the power cable 1. The first cable length or section 11a and the second cable length or section 11b have the same general structure, for example as shown in the cross-section in Fig. 1. The joint 9 has a larger outer diameter than the first and the second cable lengths or sections 11a and 11b which are connected via the joint 9.

The joint 9 may normally be manufactured by removing a portion of the insulation system 5 at the ends of the two cable lengths or sections 11a and 11 to expose the respective conductors 3. The two conductors 3 are then welded and the insulation system is rebuilt. A shrink tube 13 may finally be placed around the almost completed joint. The shrink tube is subsequently subjected to a heat treatment. The shrink tube may hence define the outer surface of the power cable 1 in the completed joint region.

Fig. 3 shows an example of a power cable system 15, including a power cable such as power cable 1, and an external link box 17.

The metal screen 7 has a first metal screen section 7b which surrounds the insulation system 5 on a first side of the joint 9. The first metal screen section 7b extends along the first cable length or section 11a. The metal screen 7 has a second metal screen section 7c which surrounds the insulation system 5 on a second side of the joint 9. The second metal screen portion 7c extends along the second cable length or section 11b.

In the case that the metal screen is composed of wires, the metal wires 7a of the metal screen 7 terminate in the joint region. Hence, the first metal screen section 7b and the second metal screen section 7c terminate in the joint region. This is also the case if metal foils or sheet metal is used for forming the metal screen. There is hence a gap between the first metal screen section 7b and the second metal screen section 7c. The joint 9 is designed with this gap.

It should be noted that for reasons of simplicity, only one metal wire of the first metal screen section 7b and only one metal wire of the second metal screen section 7b are shown in Fig. 3.

The end portions of the metal wires 7a of the first metal screen section 7b may be bundled. The end portions of the metal wires 7a of the second metal screen section 7c may be bundled. The end portions of the metal wires 7a of both the first metal screen section 7b and the second metal screen section 7c may for example be clamped together to form the respective bundle.

The power cable 1 furthermore comprises a surge arrester assembly 19. The surge arrester assembly 19 comprises a first terminal 19a and a second terminal 19b. The metal wires 7a of the first metal screen section 7b are electrically connected to the first terminal 19a. For example, the bundle formed by the metal wires 7a of the first metal screen section 7b may be connected to the first terminal 19a. The metal wires 7a of the second metal screen section 7c may be electrically connected to the second terminal 19b. For example, the bundle formed by the metal wires 7a of the second metal screen section 7c may be connected to the first terminal 19a.

Alternatively, in case of metal foils or sheet metal end sections of the metal foils or sheet metal of each metal screen section is connected to a respective one of the first terminal and the second terminal metal screen.

The first terminal 19a may be a first annular metal structure mounted around the insulation system 5 of the power cable 1. The first annular metal structure may for example be made of copper or aluminium. The second terminal 19b may be a second annular metal structure mounted around the insulation system 5 of the power cable 1. The second annular metal structure may for example be made of copper or aluminium. The first annular metal structure and the second annular metal structure may be mounted axially spaced apart around the insulation system 5.

The power cable system 15 comprises a first bonding lead 21a and a second bonding lead 21b. The first bonding lead 21a is electrically connected to the first terminal 19a. In particular, the first bonding lead 21a may be directly connected to the first terminal 19a. The second bonding lead 21b is electrically connected to the second terminal 19b. The second bonding lead 21b may be directly connected to the second terminal 19b.

The first bonding lead 21a and the second bonding lead 21b are drawn out from the power cable 1 and connected to the external link box 17. The link box 17 comprises means for selectively electrically connecting the first bonding lead 21a with the second bonding lead 21b. Such means may for example be connection plates to which the first bonding lead 21a and the second bonding lead 21b may be connected. For example, when measurements are to be carried out, the first bonding lead 21a may be disconnected from the second bonding lead 21b in the link box 17. During normal operation of the power cable 1, the first bonding lead 21a and the second bonding lead 21b are electrically connected via the link box 17 and also connected to ground. The first metal screen section 7b and the second metal screen section 7b are hence electrically connected during normal operation. Continuity along the entire metal screen 7 is thereby provided during normal cable operation.

The surge arrester assembly 19 comprises one or more surge arresters 190. The one or more surge arresters 190 are connected between the first terminal 19a and the second terminal 19b. In particular, each surge arrester 190 has a first surge arrester terminal and a second surge arrester terminal, wherein the first surge arrester terminal is connected to the first terminal 19a and the second surge arrester terminal is connected to the second terminal 19b.

In case the first terminal 19a is a first annular metal structure and the second terminal 19b is a second annular metal structure which are axially spaced apart, the one or more surge arresters 19c may be arranged between the first terminal 19a and the second terminal 19b. The one or more surge arresters 19c may hence be sandwiched between the first terminal 19a and the second terminal 19b. In an example comprising a plurality of surge arresters 19c, the surge arresters 19c may for example be distributed evenly in the circumferential direction between the first terminal 19a and the second terminal 19b.

The one or more surge arresters 19c may for example be surge arrester discs. A surge arrester disc may have a cylindrical shape with its first and second surge arrester terminal arranged at the respective end of the cylinder structure, and may thereby advantageously be arranged between the first terminal 19a and the second terminal 19b. The one or more surge arresters 19c are preferably varistors, such as metal oxide varistors.

In the example shown in Fig. 3, the surge arrester assembly 19 is arranged adjacent to one axial end of the joint 9. As previously explained, the joint 9 may have a larger diameter than the first cable length or section 11a and the second cable length or section 11b. The surge arrester assembly 19, and in particular the first terminal 19a and the second terminal 19b may have outer diameters which correspond to or essentially correspond to the outer diameter of the joint 9. The shrink tube 13 may be provided over the surge arrester assembly 19 and over the joint 9, to cover these components. The shrink tube may form the external surface of the joint 9 and also cover the surge arrester assembly 19. The surge arrester assembly 19 will thereby visually appear to be integrated with the joint 9. The first bonding lead 21a and the second bonding lead 21b may for example be drawn out from underneath the shrink tube and lead to the link box 17.

In the example shown in Fig. 3, the power cable 1 comprises a single surge arrester assembly 19 arranged adjacent to one axial end of the joint 9. The second metal screen section 7c is lead axially over the joint 9 to the surge arrester assembly 19 and connected to the second terminal 19b thereof.

The loop formed by the first bonding lead 21a and the second bonding lead 21b, connected via the link box 17 during normal operation, forms an impedance having an inductive component. The magnitude of the reactance hence increases with an increasing frequency, such as in the case of a voltage surge that travels along the metal screen 7. The surge arrester assembly essentially shorts the first metal screen section 7b and the second metal screen section 7c in the event of a voltage surge so that the risk of dielectric breakdown in the gap between the first metal screen section 7b and the second metal screen section 7c obtained between the first terminal 19a and the second terminal 19b can be eliminated.

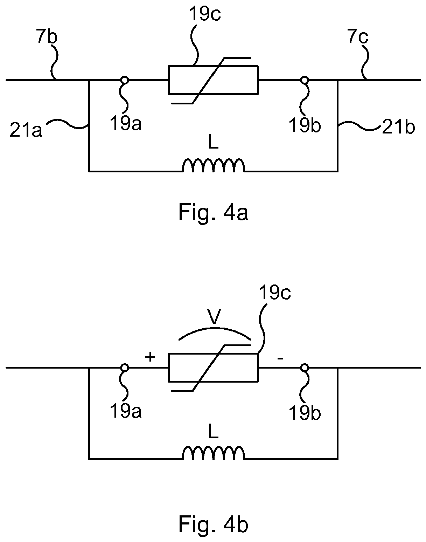

Fig. 4a schematically shows a simplified circuit model of parts of the power cable system 15 during normal operation. In thus situation, the first bonding lead 21a and the second bonding lead 21b are electrically connected to each other via the link box 17 shown in Fig. 3. An impedance including an inductive component L is created by the loop formed by the first bonding lead 21a and the second bonding lead 21b which are connected via the link box 17.

The one or more surge arresters 19c have a very high impedance in this case, and the inductive component L has a low reactance due to the low frequencies involved. There is hence essentially no voltage drop over the gap between the first metal screen section 7b and the second metal screen section 7c formed between the first terminal 19a and the second terminal 19b.

Fig. 4b shows a situation in which a voltage surge travels along the metal screen 7. In this case, the inductive component L would have a high reactance in case the voltage surge would travel through the loop formed by the first bonding lead 21a and the second bonding lead 21b. The one or more surge arresters 19c will however in this case have a very low impedance, with essentially no voltage drop V. The voltage surge will hence travel through the one or more surge arresters instead of the loop, and since essentially no potential difference occurs over the gap between the first terminal 19a and the second terminal 19b the risk of a dielectric breakdown in the gap can essentially be eliminated.

The concept has mainly been described above with reference to a few embodiments. However, as is readily appreciated by a person skilled in the art, other embodiments than the ones disclosed above are equally possible within the scope, as defined by the appended patent claims.

## Claims

1. A power cable system (15) comprising:
- a power cable (1) having a joint (9), wherein the joint (9) connects a first cable length (11a) and a second cable length (11b) of the power cable (1),
the power cable (1) comprising:
a conductor (3),
an insulation system (5) surrounding the conductor (3),
a metal screen (7) surrounding the insulation system (5),
wherein the metal screen (7) has a first metal screen section (7b) surrounding the insulation system (5) on a first side of the joint (9) and extending along the first cable length (11a), and a second metal screen section (7c) surrounding the insulation system (5) on a second side of the joint (9) and extending along the second cable length (11b), and
a surge arrester assembly (19) having a first terminal (19a) electrically connected to the first metal screen section (7b) and a second terminal (19b) electrically connected to the second metal screen section (7c), whereby the first metal screen section (7b) is arranged with a gap from the second metal screen section (7c);
- a first bonding lead (21a) electrically connected to the first metal screen section (7b) and a second bonding lead (21b) electrically connected to the second metal screen section (21b); and
- a link box (17),
wherein the first bonding lead (21a) and the second bonding lead (21b) are configured to be electrically connected to each other via the link box (17) to thereby electrically connect the first metal screen section (7b) and the second metal screen section (7c) with each other, and
wherein the surge arrester assembly (19) comprises a plurality of surge arresters (19c) in the form of surge arrester discs, the surge arrester discs being connected in parallel with each other between the first terminal (19a) and the second terminal (19b).

2. The power cable system (15) as claimed in claim 1, wherein the surge arrester assembly (19) comprises at least one surge arrester (19c) electrically connected between the first terminal (19a) and the second terminal (19b).

3. The power cable system (15) as claimed in claim 2, wherein the first bonding lead (21a) is electrically connected to the first terminal (19a), and the second bonding lead (21b) is electrically connected to the second terminal (19b).

4. The power cable system (15) as claimed in any of the preceding claims, wherein the first terminal (19a) is a first annular metal structure mounted around the insulation system (5) and the second terminal (19b) is a second annular metal structure mounted around the insulation system (5) axially spaced apart from the first annular metal structure.

5. The power cable system (15) as claimed in claim 4, wherein the first annular metal structure and the second annular metal structure are made of copper.

6. The power cable system (15) as claimed in any of the preceding claims, wherein the surge arrester assembly (19) is configured to be mounted adjacent to one axial end of the joint (9).

7. The power cable system (15) as claimed in any of the preceding claims, wherein the power cable (1) comprises a shrink tube (13) surrounding the surge arrester assembly (19) and forming part of an external surface of the power cable (1).

8. The power cable system as claimed in any of the preceding claims, wherein the metal screen (7) is formed by a plurality of metal wires (7a) helically wound around the insulation system in the axial direction of the power cable (1).

9. The power cable system (15) as claimed in claim 8, wherein the plurality of metal wires (7a) on a first side of the joint (9) form the first metal screen section (7b), which in a region of the joint (9) is bundled into a first bundle thereby terminating the first metal screen section (7b), and the plurality of metal wires (7a) on a second side of the joint (9) form the second metal screen section (7c), which in a region of the joint (9) is bundled into a second bundle thereby terminating the second metal screen section (7c), the first bundle and the second bundle being connected to the surge arrester assembly (19).

10. The power cable system (15) as claim 9, wherein the first bundle is mechanically connected to the first terminal (19a) and the second bundle is mechanically connected to the second terminal (19b).

11. The power cable system (15) as claimed in any of the preceding claims, wherein the power cable (1) is a DC cable.

12. The power cable system (15) as claimed in any of the preceding claims, wherein the power cable (1) is a high voltage cable.

## Patentansprüche

1. Stromkabelsystem (15), umfassend:
- ein Stromkabel (1) mit einem Verbindungsstück (9), wobei das Verbindungsstück (9) eine erste Kabellänge (11a) und eine zweite Kabellänge (11b) des Stromkabels (1) miteinander verbindet,
das Stromkabel (1), umfassend:
einen Leiter (3),
ein Isolationssystem (5), das den Leiter (3) umgibt,
einen Metallschirm (7), der das Isoliersystem (5) umgibt,
wobei der Metallschirm (7) einen ersten Metallschirmabschnitt (7b) aufweist, der das Isoliersystem (5) auf einer ersten Seite des Verbindungsstücks (9) umgibt und sich entlang der ersten Kabellänge (11a) erstreckt, und einen zweiten Metallschirmabschnitt (7c), der das Isoliersystem (5) auf einer zweiten Seite des Verbindungsstücks (9) umgibt und sich entlang der zweiten Kabellänge (11b) erstreckt, und
eine Überspannungsableiteranordnung (19) mit einem ersten Anschluss (19a), der elektrisch mit dem ersten Metallschirmabschnitt (7b) verbunden ist, und einem zweiten Anschluss (19b), der elektrisch mit dem zweiten Metallschirmabschnitt (7c) verbunden ist, wobei der erste Metallschirmabschnitt (7b) mit einem Abstand zu dem zweiten Metallschirmabschnitt (7c) angeordnet ist;
- eine erste Bondleitung (21a), die elektrisch mit dem ersten Metallschirmabschnitt (7b) verbunden ist, und eine zweite Bondleitung (21b), die elektrisch mit dem zweiten Metallschirmabschnitt (21b) verbunden ist; und
- eine Linkbox (17),
wobei die erste Bondleitung (21a) und die zweite Bondleitung (21b) so konfiguriert sind, dass sie über die Linkbox (17) elektrisch miteinander verbunden sind, um dadurch den ersten Metallschirmabschnitt (7b) und den zweiten Metallschirmabschnitt (7c) elektrisch miteinander zu verbinden, und
wobei die Überspannungsableiteranordnung (19) eine Vielzahl von Überspannungsableitern (19c) in Form von Überspannungsableiterscheiben umfasst, wobei die Überspannungsableiterscheiben parallel zueinander zwischen dem ersten Anschluss (19a) und dem zweiten Anschluss (19b) geschaltet sind.

2. Stromkabelsystem (15) nach Anspruch 1, wobei die Überspannungsableiteranordnung (19) mindestens einen Überspannungsableiter (19c) umfasst, der elektrisch zwischen dem ersten Anschluss (19a) und dem zweiten Anschluss (19b) verbunden ist.

3. Stromkabelsystem (15) nach Anspruch 2, wobei die erste Bondleitung (21a) elektrisch mit dem ersten Anschluss (19a) und die zweite Bondleitung (21b) elektrisch mit dem zweiten Anschluss (19b) verbunden ist.

4. Stromkabelsystem (15) nach einem der vorhergehenden Ansprüche, wobei der erste Anschluss (19a) eine erste ringförmige Metallstruktur ist, die um das Isoliersystem (5) angebracht ist, und der zweite Anschluss (19b) eine zweite ringförmige Metallstruktur ist, die um das Isoliersystem (5) angebracht ist und von der ersten ringförmigen Metallstruktur axial beabstandet ist.

5. Stromkabelsystem (15) nach Anspruch 4, wobei die erste ringförmige Metallstruktur und die zweite ringförmige Metallstruktur aus Kupfer bestehen.

6. Stromkabelsystem (15) nach einem der vorhergehenden Ansprüche, wobei die Überspannungsableiteranordnung (19) so konfiguriert ist, dass sie benachbart zu einem axialen Ende des Verbindungsstücks (9) angebracht wird.

7. Stromkabelsystem (15) nach einem der vorhergehenden Ansprüche, wobei das Stromkabel (1) einen Schrumpfschlauch (13) umfasst, der die Überspannungsableiteranordnung (19) umgibt und einen Teil einer Außenfläche des Stromkabels (1) bildet.

8. Stromkabelsystem nach einem der vorhergehenden Ansprüche, wobei der Metallschirm (7) durch eine Vielzahl von Metalldrähten (7a) gebildet wird, die in axialer Richtung des Stromkabels (1) spiralförmig um das Isolationssystem gewickelt sind.

9. Stromkabelsystem (15) nach Anspruch 8, wobei die Vielzahl von Metalldrähten (7a) auf einer ersten Seite des Verbindungsstücks (9) den ersten Metallschirmabschnitt (7b) bilden, der in einem Bereich des Verbindungsstücks (9) zu einem ersten Bündel gebündelt ist, wodurch der erste Metallschirmabschnitt (7b) abgeschlossen wird, und die Vielzahl von Metalldrähten (7a) auf einer zweiten Seite des Verbindungsstücks (9) den zweiten Metallschirmabschnitt (7c) bilden, der in einem Bereich des Verbindungsstücks (9) zu einem zweiten Bündel gebündelt ist, wodurch der zweite Metallschirmabschnitt (7c) abgeschlossen wird, wobei das erste Bündel und das zweite Bündel mit der Überspannungsableiteranordnung (19) verbunden sind.

10. Stromkabelsystem (15) nach Anspruch 9, wobei das erste Bündel mechanisch mit dem ersten Anschluss (19a) und das zweite Bündel mechanisch mit dem zweiten Anschluss (19b) verbunden ist.

11. Stromkabelsystem (15) nach einem der vorhergehenden Ansprüche, wobei das Stromkabel (1) ein Gleichstromkabel ist.

12. Stromkabelsystem (15) nach einem der vorhergehenden Ansprüche, wobei das Stromkabel (1) ein Hochspannungskabel ist.

## Revendications

1. Système de câble d'alimentation (15) comprenant :
- un câble d'alimentation (1) comportant un raccord (9), dans lequel le raccord (9) relie une première longueur de câble (11a) et une deuxième longueur de câble (11b) du câble d'alimentation (1),
le câble d'alimentation (1) comprenant :
un conducteur (3),
un système d'isolation (5) entourant le conducteur (3),
un blindage métallique (7) entourant le système d'isolation (5),
dans lequel le blindage métallique (7) comporte une première section de blindage métallique (7b) entourant le système d'isolation (5) sur un premier côté du raccord (9) et s'étendant le long de la première longueur de câble (11a), et une deuxième section de blindage métallique (7c) entourant le système d'isolation (5) sur un deuxième côté du raccord (9) et s'étendant le long de la deuxième longueur de câble (11b), et
un ensemble de parafoudres (19) comportant une première borne (19a) reliée électriquement à la première section de blindage métallique (7b) et une deuxième borne (19b) reliée électriquement à la deuxième section de blindage métallique (7c), de telle manière que la première section de blindage métallique (7b) soit agencée avec un écartement par rapport à la deuxième section de blindage métallique (7c) ;
- un premier conducteur de métallisation (21a) relié électriquement à la première section de blindage métallique (7b) et un deuxième conducteur de métallisation (21b) relié électriquement à la deuxième section de blindage métallique (21b) ; et
- un boîtier de liaison (17),
dans lequel le premier conducteur de métallisation (21a) et le deuxième conducteur de métallisation (21b) sont configurés pour être reliés électriquement l'un à l'autre par l'intermédiaire du boîtier de liaison (17) pour de ce fait relier électriquement la première section de blindage métallique (7b) et la deuxième section de blindage métallique (7c) l'une à l'autre, et
dans lequel l'ensemble de parafoudres (19) comprend une pluralité de parafoudres (19c) sous la forme de disques de parafoudres, les disques de parafoudres étant reliés en parallèle les uns aux autres entre la première borne (19a) et la deuxième borne (19b).

2. Système de câble d'alimentation (15) selon la revendication 1, dans lequel l'ensemble de parafoudres (19) comprend au moins au moins un parafoudre (19c) relié électriquement entre la première borne (19a) et la deuxième borne (19b).

3. Système de câble d'alimentation (15) selon la revendication 2, dans lequel le premier conducteur de métallisation (21a) est relié électriquement à la première borne (19a), et le deuxième conducteur de liaison (21b) est relié électriquement à la deuxième borne (19b).

4. Système de câble d'alimentation (15) selon l'une quelconque des revendications précédentes, dans lequel la première borne (19a) est une première structure métallique annulaire montée autour du système d'isolation (5) et la deuxième borne (19b) est une deuxième structure métallique annulaire montée autour du système d'isolation (5) espacée axialement de la première structure métallique annulaire.

5. Système de câble d'alimentation (15) selon la revendication 4, dans lequel la première structure métallique annulaire et la deuxième structure métallique annulaire sont constituées de cuivre.

6. Système de câble d'alimentation (15) selon l'une quelconque des revendications précédentes, dans lequel l'ensemble de parafoudres (19) est configuré pour être monté adjacent à une extrémité axiale du raccord (9).

7. Système de câble d'alimentation (15) selon l'une quelconque des revendications précédentes, dans lequel le câble d'alimentation (1) comprend un tube thermorétractable (13) entourant l'ensemble de parafoudres (19) et faisant partie d'une surface externe du câble d'alimentation (1).

8. Système de câble d'alimentation selon l'une quelconque des revendications précédentes, dans lequel le blindage métallique (7) est formé par une pluralité de fils métalliques (7a) enroulés hélicoïdalement autour du système d'isolation dans la direction axiale du câble d'alimentation (1).

9. Système de câble d'alimentation (15) selon la revendication 8, dans lequel la pluralité de fils métalliques (7a) sur un premier côté du raccord (9) forment la première section de blindage métallique (7b) et, dans une région du raccord (9), sont regroupés dans un premier groupe en terminant de ce fait la première section de blindage métallique (7b), et la pluralité de fils métalliques (7a) sur un deuxième côté du raccord (9) forment la deuxième section de blindage métallique (7c) et, dans une région du raccord (9), sont regroupés dans un deuxième groupe en terminant de ce fait la deuxième section de blindage métallique (7c), le premier groupe et le deuxième groupe étant reliés à l'ensemble de parafoudres (19).

10. Système de câble d'alimentation (15) selon la revendication 9, dans lequel le premier groupe est relié mécaniquement à la première borne (19a) et le deuxième groupe est relié mécaniquement à la deuxième borne (19b) .

11. Système de câble d'alimentation (15) selon l'une quelconque des revendications précédentes, dans lequel le câble d'alimentation (1) est un câble de courant continu.

12. Système de câble d'alimentation (15) selon l'une quelconque des revendications précédentes, dans lequel le câble d'alimentation (1) est un câble de haute tension.
